# EUROPEAN PATENT APPLICATION

(11) **EP 4 726 076 A1**
(43) Date of publication of application: **15.04.2026**
(21) Application number: 24826157.0
(22) Date of filing: 03.06.2024
(51) Int. Cl.: C25B 1/04, C25B 11/00, C25B 9/65, C25B 15/02, C25B 15/06, A47K 7/04

(54) **WATER ELECTROLYSIS DEVICE AND SKIN CLEANSING DEVICE COMPRISING SAME**

(30) Priority: 20.06.2023 KR 20230078953
(71) Applicant: APR CO., LTD., Seoul 05551 (KR)
(72) Inventor: JI, Jong Chul, Seoul 05551 (KR); LEE, Gyoun Jung, Seoul 05551 (KR); PARK, Seung Woo, Seoul 05551 (KR)
(74) Representative: Henkel & Partner mbB
(86) International application number: PCT/KR2024/007538
(87) International publication number: WO 2024/262835

(57) **Abstract**

Disclosed is a water electrolysis device, which can be suitably used in a skin cleansing device for cleansing the skin by supplying water containing microbubbles to the skin. The electrolysis device includes: a pair of electrodes (44, 46) positioned facing each other, which apply voltage to water and electrolyze the water to generate microbubbles in the water; a power supply unit (100) that outputs voltage applied to the electrodes (44, 46); a power supply control unit (200) that applies or blocks the voltage output from the power supply unit (100) to the electrodes (44, 46) according to a drive signal from a system control unit (500); a current measurement unit (300) that detects the amount of current supplied to the electrodes (44, 46) from the power supply control unit (200) and flowing through the electrodes (44, 46); an electrode polarity conversion unit (400) that switches the polarity of the voltage applied to the electrodes (44, 46) from the power supply control unit (200) according to a polarity conversion signal from the system control unit (500); and the system control unit (500) that controls the power supply control unit (200) according to the amount of current detected by the current measurement unit (300) and controls the operation of the electrode polarity conversion unit (400).

## Description

### [Technical Field]

The present invention relates to a water electrolysis device, and more particularly, to a water electrolysis device that can be suitably used in a skin cleansing device that cleanses the skin by supplying water containing microbubbles to the skin.

### [Background Art]

Various physical, electrical, and chemical methods are used for skin cleansing. A method of uniformly applying a cleansing product to the skin or cleansing the skin using a body cleansing device having a rotating or vibrating brush, as a physical device for skin cleansing, is employed. For example, Korean Patent Registration No. 10-2324257 discloses a body cleansing device that vibrates a brush unit using a vibration motor or supplies ultrasonic vibration to a user by vibrating an ultrasonic head using an ultrasonic vibrator. Meanwhile, a skin cleansing device that electrolyzes water to generate microbubbles consisting of oxygen, hydrogen, etc., inside the water and supplies the water containing microbubbles to the skin to cleanse the skin is also being developed (see Korean Patent Application No. 10-2023-0047442).

Skin beauty methods using ionized water, bubbles, etc., generated by electrolyzing water are commonly known, but miniaturization of electrolysis devices is not easy, and small electrolysis devices are known to have low electrolysis performance and low practicality.

Meanwhile, in the process of electrolyzing a liquid such as water, if voltage is applied to the electrode for a long time, the material in contact with the electrode may ionize, and metal materials may dissolve, leading to scale formation. This phenomenon becomes more severe as the hardness of the water increases. The scale generated by the dissolution of metal materials adheres to the electrode and degrades the electrolysis performance of the electrode. In the case of electrolysis devices used in household beauty devices, since they are small in size, their electrolysis performance is low, and the above phenomenon further degrades the electrolysis performance, making it difficult to maintain the beauty effects from electrolysis for a long period.

Additionally, in small electrolysis devices used in household skin cleansing devices, since the electrodes face each other at narrow intervals, the liquid between the electrodes can rise in temperature relatively quickly, and the time interval from the point of electrolysis to application on the skin is very short, so electrode overload, overcurrent, overheating, etc., of the skin cleansing device must be strictly controlled.

Therefore, there is an increasing need for an electrolysis device with high water electrolysis efficiency, excellent durability, and safety, and a skin cleansing device having the same.

### [Prior Art Documents]

(Patent Document 1) Korean Patent No. 10-2324257
(Patent Document 2) Korean Patent Application No. 10-2023-0047442

### [Disclosure]

### [Technical Problem]

An object of the present invention is to provide an electrolysis device that has high water electrolysis efficiency, excellent durability and safety, and can be manufactured in a small size, and a skin cleansing device having the same.

Another object of the present invention is to provide a water electrolysis device that can be suitably used in small household beauty devices such as skin cleansing devices, and a skin cleansing device having the same.

### [Technical Solution]

To achieve the above objects, the present invention provides a water electrolysis device comprising: a pair of electrodes (44, 46) positioned facing each other, which applies voltage to water and electrolyzes the water to generate microbubbles in the water; a power supply unit (100) that outputs voltage applied to the electrodes (44, 46); a power supply control unit (200) that applies or blocks the voltage output from the power supply unit (100) to the electrodes (44, 46) according to a drive signal from a system control unit (500); a current measurement unit (300) that detects the amount of current supplied to the electrodes (44, 46) from the power supply control unit (200) and flowing through the electrodes (44, 46); an electrode polarity conversion unit (400) that switches the polarity of the voltage applied to the electrodes (44, 46) from the power supply control unit (200) according to a polarity conversion signal from the system control unit (500); and the system control unit (500) that controls the power supply control unit (200) according to the amount of current detected by the current measurement unit (300) and controls the operation of the electrode polarity conversion unit (400).

The present invention also provides a skin cleansing device comprising: a water tank (20) coupled to one end of a housing (10) and accommodating water; a pump (30) that withdraws the water accommodated in the water tank (20) and transfers the withdrawn water at a predetermined pressure so that the withdrawn water is sprayed onto a user's skin through an electrolysis chamber (40); the electrolysis chamber (40) including a pair of electrodes (44, 46) positioned facing each other, which electrolyzes the water supplied from the pump (30) to generate water containing microbubbles; and an electrolysis circuit board (80) that supplies current to a first electrode (44) and a second electrode (46) to electrolyze the water passing through the first electrode (44) and the second electrode (46), wherein the electrolysis circuit board (80) includes: a power supply unit (100) that outputs voltage applied to the electrodes (44, 46); a power supply control unit (200) that applies or blocks the voltage output from the power supply unit (100) to the electrodes (44, 46) according to a drive signal from a system control unit (500); a current measurement unit (300) that detects the amount of current supplied to the electrodes (44, 46) from the power supply control unit (200) and flowing through the electrodes (44, 46); an electrode polarity conversion unit (400) that switches the polarity of the voltage applied to the electrodes (44, 46) from the power supply control unit (200) according to a polarity conversion signal from the system control unit (500); and the system control unit (500) that controls the power supply control unit (200) according to the amount of current detected by the current measurement unit (300) and controls the operation of the electrode polarity conversion unit (400).

### [Advantageous Effects]

The electrolysis device according to the present invention has high water electrolysis efficiency, excellent durability and stability, and can be manufactured in a small size, so it can be suitably used in small household beauty devices such as skin cleansing devices.

### [Description of Drawings]

FIG. 1 is a block diagram showing the configuration of a water electrolysis device according to an embodiment of the present invention.
FIG. 2 is a diagram showing an example of the electronic circuit configuration of a current measurement unit and an electrode polarity conversion unit used in the water electrolysis device according to the present invention.
FIG. 3 is a diagram showing a more specific electronic circuit configuration of the current measurement unit and the electrode polarity conversion unit used in the water electrolysis device according to an embodiment of the present invention.
FIG. 4 is a diagram showing a more specific electronic circuit configuration of a power supply unit and a power supply control unit used in the water electrolysis device according to an embodiment of the present invention.
FIG. 5 is a perspective view (A) and a longitudinal sectional view (B) of a skin cleansing device having a small electrolysis device according to the present invention.
FIGS. 6 and 7 are a sectional view and an internal perspective view showing the configuration of an electrolysis chamber that can be used in a skin cleansing device according to an embodiment of the present invention.
FIG. 8 is a diagram showing another example of an electrolysis chamber to which a small electrolysis device according to the present invention is used.

### [Mode of Disclosure]

Hereinafter, the present invention will be described in detail with reference to the accompanying drawings. In the accompanying drawings, for convenience of explanation, some components may be shown larger or smaller than actual. In addition, in the description of the present invention, detailed descriptions of well-known general functions or configurations are omitted.

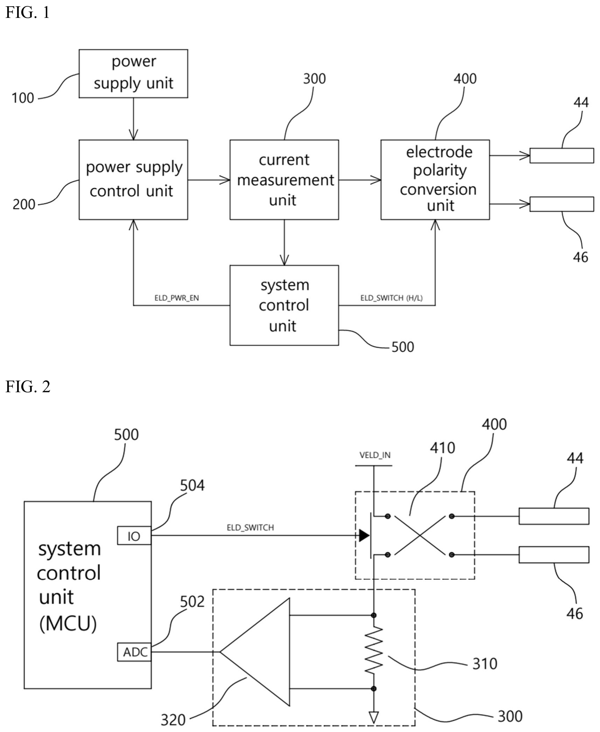

FIG. 1 is a block diagram showing the configuration of a water electrolysis device according to an embodiment of the present invention. As shown in FIG. 1, the water electrolysis device according to the present invention includes a pair of electrodes (44, 46), a power supply unit (100), a power supply control unit (200), a current measurement unit (300), an electrode polarity conversion unit (400), and a system control unit (500).

The pair of electrodes (44, 46) are positioned facing each other and applies voltage to the water and electrolyzes the water to generate microbubbles in the water.

The power supply unit (100) outputs voltage applied to the electrodes (44, 46).

The power supply control unit (200) applies or blocks (on/off) the voltage output from the power supply unit (100) to the electrodes (44, 46) according to a drive signal from the system control unit (500).

The current measurement unit (300) detects the amount of current supplied to the electrodes (44, 46) from the power supply control unit (200) and flowing through the electrodes (44, 46), and if necessary, amplifies it and transmits it to the system control unit (500).

The electrode polarity conversion unit (400) switches the polarity of the voltage applied to the electrodes (44, 46) from the power supply control unit (200) according to a polarity conversion signal from the system control unit (500).

The system control unit (500) controls the power supply control unit (200) according to the amount of current detected by the current measurement unit (300) and controls the operation of the electrode polarity conversion unit (400). Specifically, the system control unit (500) determines the amount of water present between the electrodes (44, 46), for example, whether a sufficient amount of water is present between the electrodes (44, 46), according to the amount of current detected by the current measurement unit (300). At this time, if the flow of water passing between the electrodes (44, 46) is abnormal (e.g., too little water or no water), the system control unit (500) blocks the drive signal output to the power supply control unit (200) to block the voltage applied to the electrodes (44, 46). On the other hand, if the flow of water passing between the electrodes (44, 46) is normal, the system control unit (500) outputs a drive signal to the power supply control unit (200) to apply voltage to the electrodes (44, 46) (normal operation). That is, when an abnormal current flow is detected between the electrodes (44, 46), the system control unit (500) blocks the voltage applied to the electrodes (44, 46) to suppress overheating, overcurrent, etc., of the electrodes (44, 46), thereby improving the stability of the electrolysis device. In addition, the system control unit (500) periodically outputs a polarity conversion signal (e.g., High/Low) to the electrode polarity conversion unit (400) to periodically switch the polarity of the voltage applied to each of the electrodes (44, 46), i.e., by switching, thereby extending the lifespan of the electrodes (44, 46).

FIG. 2 is a diagram showing an example of the electronic circuit configuration of the current measurement unit (300) and the electrode polarity conversion unit (400) used in the water electrolysis device according to the present invention.

As shown in FIG. 2, the electrode polarity conversion unit (400) includes a polarity conversion switch (410) for switching the polarity, i.e., the application direction, of the voltage (VELD_IN) applied to the electrodes (44, 46). The polarity conversion switch (410) switches the polarity of the voltage (VELD _IN) applied to the electrodes (44, 46) according to a polarity conversion signal (ELD_SWITCH, high/low) output from the system control unit (500). By periodically changing the polarity conversion signal (ELD_SWITCH) (high ↔ low) to periodically convert the polarity of the voltage (VELD_IN) applied to the electrodes (44, 46), the durability, safety, and efficiency of the electrolysis electrodes (44, 46) can be improved.

In addition, as shown in FIG. 2, the current measurement unit (300) includes a current sensor (310) connected to the polarity conversion switch (410) to detect the amount of current flowing through the electrodes (44, 46), and if necessary, may include an amplifier (320) to amplify the output value (current signal) of the current sensor (310).

The system control unit (500) may be a micro controller unit (MCU) that controls the power supply control unit (200) and the electrode polarity conversion unit (400) according to the output signal of the current measurement unit (300), user operation, a preset program, etc. The system control unit (500) may include an analog-to-digital converter (502, ADC) for converting an analog signal input from the current measurement unit (300) into a digital signal, and an input/output port (504, IO) for outputting a polarity conversion signal (ELD_SWITCH, high/low) to the electrode polarity conversion unit (400).

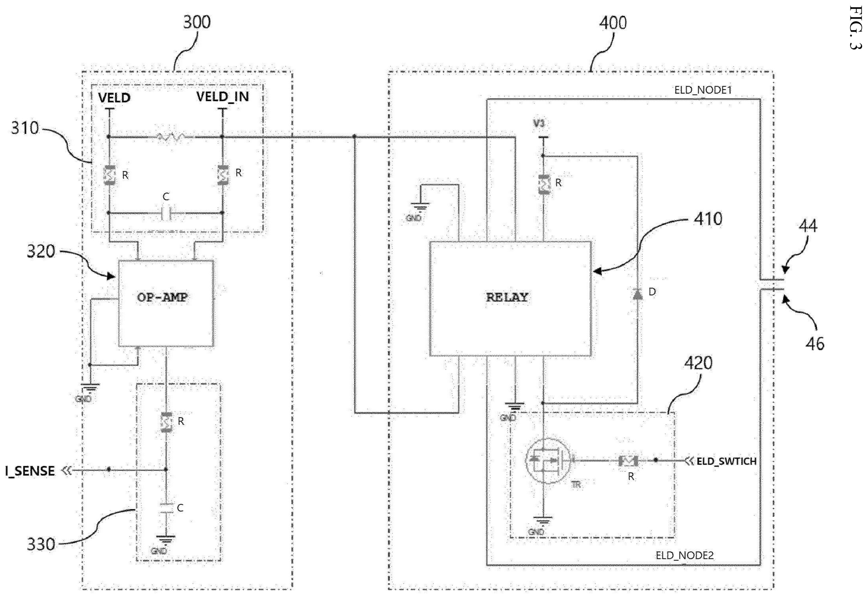

FIG. 3 is a diagram showing a more specific electronic circuit configuration of the current measurement unit (300) and the electrode polarity conversion unit (400) used in the water electrolysis device according to an embodiment of the present invention.

As shown in FIG. 3, the current measurement unit (300) used in the water electrolysis device according to the present invention includes a current sensor (310) that detects a change in the voltage (VELD_IN) applied to the electrode polarity conversion unit (400), for example, using a shunt resistor, and generates a current signal corresponding to the amount of current flowing through the electrodes (44, 46), an amplifier (320) that amplifies the current signal generated by the current sensor (310) to generate an amplified current signal, and a low-pass filter (330) that removes noise from the amplified current signal and outputs a current signal (I_SENSE) corresponding to the amount of current flowing through the electrodes (44, 46).

In addition, the electrode polarity conversion unit (400) used in the water electrolysis device according to the present invention includes a relay switch (410) that receives the voltage (VELD_IN) from the power supply control unit (200) and outputs it to the electrodes (44, 46) while being capable of converting the polarity of the voltage (VELD_IN) output to the electrodes (44, 46), and a polarity conversion switch (420) that controls the relay switch (410) to convert the polarity of the voltage (VELD_IN) output to the electrodes (44, 46) according to the polarity conversion signal (ELD_SWITCH, high/low) input from the system control unit (500).

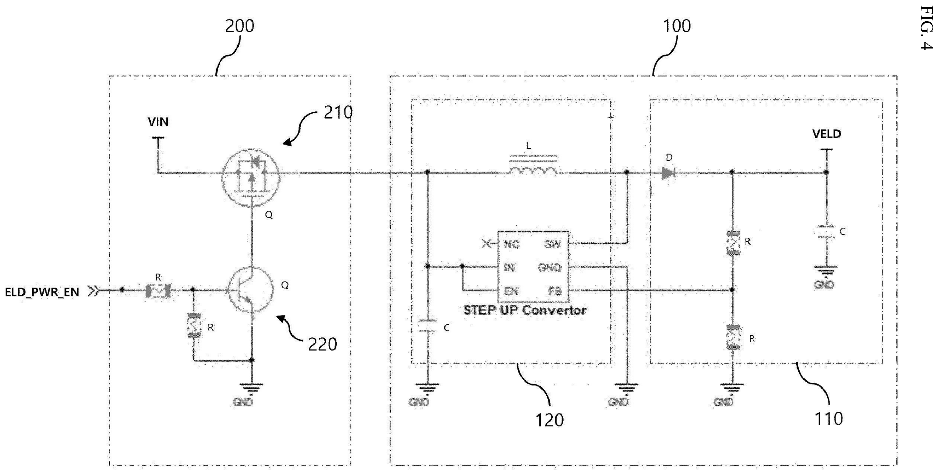

FIG. 4 is a diagram showing a more specific electronic circuit configuration of the power supply unit (100) and the power supply control unit (200) used in the water electrolysis device according to an embodiment of the present invention.

As shown in FIG. 4, the power supply unit (100) used in the water electrolysis device according to the present invention may include a DC voltage smoothing and stabilizing unit (110) that smooths and stabilizes a DC voltage (DC VELD) output from a conventional battery, for example, a rechargeable battery (not shown), and a boost regulator (120) that boosts the DC voltage stabilized by the DC voltage smoothing and stabilizing unit (110) to a voltage required for electrolysis.

In addition, as shown in FIG. 4, the power supply control unit (200) may include a power supply switch (210), specifically a power supply transistor (210), that applies or blocks the voltage output from the power supply unit (100) to the electrodes (44, 46) through the current measurement unit (300) and the electrode polarity conversion unit (400), and a power supply switch control switch (220) for turning the power supply switch (210) on/off according to a drive signal (ELD_PWR_EN) from the system control unit (500).

In the water electrolysis device according to the present invention, by periodically converting the polarity of the voltage applied to the electrodes (44, 46) that electrolyze water, scale adhesion to the electrodes (44, 46) is prevented, and bubbles generated by electrolysis of water between the small-sized and adjacently positioned electrodes (44, 46) are prevented from accumulating, thereby improving the efficiency of electrolysis.

In addition, by measuring the current flowing between the electrodes (44, 46) that electrolyze water using the current measurement unit (300), the amount of liquid (water) present between the electrodes (44, 46) can be detected. That is, if the current value measured by the current measurement unit (300) is smaller than a predetermined range, it can be considered that electrolysis of water is excessively performed, generating excessive microbubbles such as hydrogen and oxygen, or the generated microbubbles are not smoothly discharged, so the voltage applied to the electrodes (44, 46) is blocked to prevent overcurrent, or the polarity of the voltage applied to the electrodes (44, 46) is converted, for example, at a faster cycle, to allow the microbubbles formed between the electrodes (44, 46) to be more easily discharged.

On the other hand, if the current value measured by the current measurement unit (300) is larger than a predetermined range, it can be considered that electrolysis of water is insufficient, so voltage is continuously applied to the electrodes (44, 46), or the polarity of the voltage applied to the electrodes (44, 46) is converted, for example, at a slower cycle, to promote electrolysis of water. Therefore, according to the present invention, the voltage applied to the electrodes (44, 46) can be adjusted by detecting the amount of liquid flowing between the electrodes (44, 46) of the electrolysis device.

When a small electrolysis device is embedded in a small household beauty device such as a skin cleansing device to generate bubbles (which may be microbubbles or nanobubbles), there may be a limit to the amount of bubbles that can be generated in a small-volume electrolysis chamber or electrolysis tube. If the generated bubbles are effectively used, by controlling the power supply control unit (200), loss of the generated bubbles can be prevented even if electrolysis is performed at predetermined intervals rather than continuously performed, which improves the durability of the electrodes (44, 46) and allows the electrolysis device to be used for a long period.

Next, an example of a skin cleansing device including the small electrolysis device according to the present invention will be described. The smaller the size of the electrolysis device, the more advantageous it is for miniaturization of the beauty device, but it is necessary to appropriately design the structure of the beauty device considering problems such as degradation of electrode lifespan due to electrolysis.

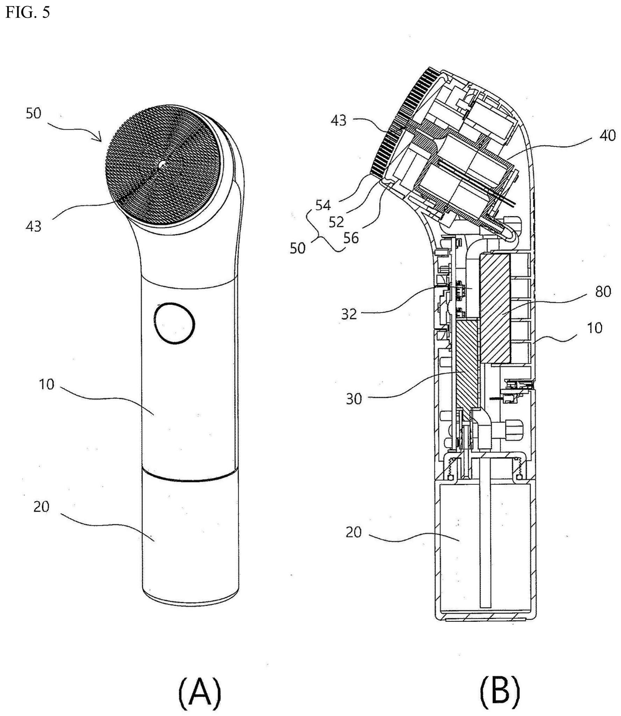

FIG. 5 is a perspective view (A) and a longitudinal sectional view (B) of a skin cleansing device having a small electrolysis device according to the present invention. As shown in FIG. 5, the skin cleansing device according to the present invention includes a housing (10), a water tank (20), a pump (30), an electrolysis chamber (40), and an electrolysis circuit board (80), and preferably further includes a vibration cleansing unit (50).

The housing (10) may be provided in a substantially cylindrical shape so that a user can hold the skin cleansing device by hand or use it with a handle attached, and the water tank (20), pump (30), electrolysis chamber (40), vibration cleansing unit (50), etc., may be accommodated inside the housing (10) or mounted at one end of the housing (10). For example, as shown in FIG. 5, the water tank (20) is coupled to one end of the housing (10), and the pump (30) and the electrolysis chamber (40) may be mounted inside. In FIG. 5, reference numeral 32 denotes a flow tube (32) connecting the water tank (20) and the electrolysis chamber (40).

The water tank (20) is a container that accommodates water, which is the medium in which microbubbles are generated and supplied. The pump (30) withdraws the water accommodated in the water tank (20) and transfers the withdrawn water at a predetermined pressure so that the withdrawn water is sprayed onto the user's skin through the electrolysis chamber (40). The pump (30) may be driven by a battery (not shown) mounted inside the housing (10). The electrolysis chamber (40) electrolyzes the water supplied from the pump (30) to generate water containing microbubbles.

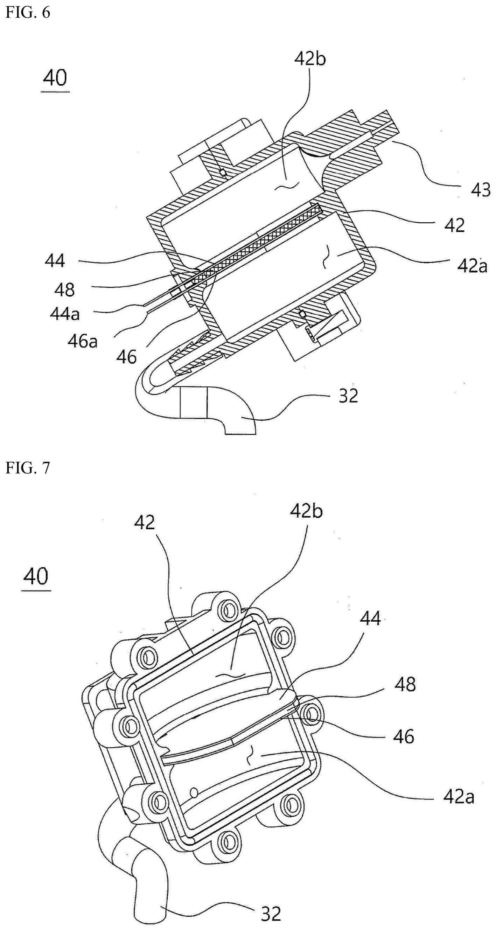

FIGS. 6 and 7 are a sectional view and an internal perspective view showing the structure of the electrolysis chamber (40) that can be used in a skin cleansing device according to an embodiment of the present invention. As shown in FIGS. 6 and 7, the electrolysis chamber (40) includes a bubble chamber (42) providing spaces (42a, 42b) through which water passes and is electrolyzed to generate microbubbles, a first electrode (44) and a second electrode (46) positioned inside the bubble chamber (42) and facing each other at a predetermined interval, an electrode separator (48) positioned between the first electrode (44) and the second electrode (46), and a water outlet (43) that supplies the water containing microbubbles to the user's skin. The first electrode (44) and the second electrode (46) are connected to the electrolysis circuit board (80, see FIG. 5) including the above-described power supply unit (100), the power supply control unit (200), the current measurement unit (300), the electrode polarity conversion unit (400), and the system control unit (500), through a first electrode terminal (44a) and a second electrode terminal (46a) respectively connected thereto. That is, the electrolysis circuit board (80) applies voltage to the first electrode (44) and the second electrode (46) to electrolyze the water between the first electrode (44) and the second electrode (46), thereby generating microbubbles in the water. When current is supplied to the first electrode (44) and the second electrode (46) through the electrolysis circuit board (80), a portion of the water passing through the first electrode (44) and the second electrode (46) is electrolyzed to generate water containing microbubbles, which is discharged through the water outlet (43).

As shown in FIGS. 6 and 7, the bubble chamber (42) may have a form to be divided into upper and lower parts centered on the electrodes (44, 46) located in the middle thereof. The water without microbubbles is supplied to the lower bubble chamber (42a) through an inlet (41), and water having the microbubbles is discharged from the upper bubble chamber (42b) through the water outlet (43).

As shown in FIG. 5, the water outlet (43) is exposed to the outside through the vibration cleansing unit (50). Water is supplied to the electrolysis chamber (40) by the pump (30), and the water containing microbubbles generated in the electrolysis chamber (40) is supplied to the user's skin through the water outlet (43) located through the vibration cleansing unit (50). The vibration cleansing unit (50) is located at one end of the housing (10) and is a part that cleanses the skin by friction in contact with the user's skin, and includes a vibration plate (52) that can vibrate in the vertical direction, i.e., in a direction perpendicular to the surface of the vibration cleansing unit (50), and a cleansing pad (54) formed on the upper portion of the vibration plate (52), and if necessary, may further include a flexible connection unit (56) connecting the vibration plate (52) and an open side end of the housing (10). The vibration cleansing unit (50), specifically the vibration plate (52) and the cleansing pad (54), may have a through-hole formed therein through which the water outlet (43) of the electrolysis chamber (40) is exposed to the outside. The cleansing pad (54) vibrates in the vertical direction together with the vibration plate (52), contacts the skin, and rubs the skin to perform the skin cleansing function.

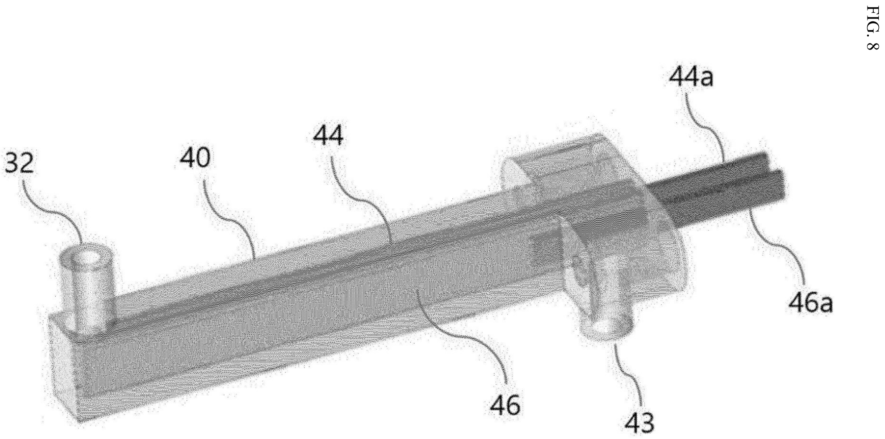

FIG. 8 is a diagram showing another example of the electrolysis chamber (40) to which the small electrolysis device according to the present invention is applied. In the example shown in FIG. 8, the electrolysis chamber (40) may have a rectangular parallelepiped structure extending in one direction. Inside the electrolysis chamber (40), a first electrode (44) and a second electrode (46) in the form of plates extending in one direction are positioned facing each other at a predetermined interval. The first electrode (44) and the second electrode (46) are connected to a circuit board including the above-described power supply unit (100), the power supply control unit (200), the current measurement unit (300), the electrode polarity conversion unit (400), and the system control unit (500) through a first electrode terminal (44a) and a second electrode terminal (46a). In addition, one end of the electrolysis chamber (40) has a flow tube (32) connected to the water tank (20), and the other end has a water outlet (43) through which water containing microbubbles is supplied to the user's skin.

In the electrolysis device of the present invention, by detecting the current flowing between the pair of electrodes (44, 46) used for electrolysis, the amount of liquid present between the electrodes (44, 46) is detected, and based on this, the power is adjusted to block overcurrent from flowing between the electrodes (44, 46), thereby ensuring user safety.

In addition, in the case of a small electrolysis device used in a household skin cleansing device, since electrolysis occurs in a very small space, scale may occur or adhere to the electrodes (44, 46), and the space in the electrolysis chamber (40), specifically the space between the electrodes (44, 46), may become saturated with microbubbles (or nanobubbles). Therefore, in the present invention, by periodically switching the polarity of the voltage applied to the electrodes (44, 46) at predetermined time intervals, the generation of scale and microbubbles is suppressed, and the lifespan of the electrolysis electrodes (44, 46) can be improved. By periodically switching the polarity of the voltage applied to the electrodes (44, 46), microbubbles (or nanobubbles) that are generated between the electrodes (44, 46) and then densely accumulated on the electrodes (44, 46) without being completely moved or dissipated can be pushed away from the electrodes (44, 46), thereby preventing degradation of electrolysis efficiency.

The electrolysis device according to the present invention not only has excellent electrolysis efficiency but also improves the durability and safety of the electrolysis electrodes (44, 46), allowing safer use. In addition, the electrolysis device according to the present invention can be easily miniaturized since the pair of electrodes (44, 46) can be positioned close to each other and can be suitably used in small-sized skin beauty devices.

Although the present invention has been described with reference to the accompanying drawings and exemplary embodiments, the present invention is not limited to the contents shown in the drawings and the above-described embodiments. For the sake of understanding, reference numerals are indicated in the following claims, but the scope of the following claims is not limited to the reference numerals and the contents shown in the drawings, and should be interpreted comprehensively to include modifications of the exemplary embodiments, equivalent configurations, and functions.

### [Industrial applicability]

The present invention provides a water electrolysis device and a skin cleansing device having the same.

## Claims

1. A water electrolysis device comprising:
a pair of electrodes (44, 46) positioned facing each other, which applies voltage to water and electrolyzes the water to generate microbubbles in the water;
a power supply unit (100) that outputs voltage applied to the electrodes (44, 46);
a power supply control unit (200) that applies or blocks the voltage output from the power supply unit (100) to the electrodes (44, 46) according to a drive signal from a system control unit (500);
a current measurement unit (300) that detects the amount of current supplied to the electrodes (44, 46) from the power supply control unit (200) and flowing through the electrodes (44, 46);
an electrode polarity conversion unit (400) that switches the polarity of the voltage applied to the electrodes (44, 46) from the power supply control unit (200) according to a polarity conversion signal from the system control unit (500); and
the system control unit (500) that controls the power supply control unit (200) according to the amount of current detected by the current measurement unit (300) and controls the operation of the electrode polarity conversion unit (400).

2. The water electrolysis device according to claim 1, wherein the system control unit (500) determines the amount of water present between the electrodes (44, 46) according to the amount of current detected by the current measurement unit (300), and if the flow of water passing between the electrodes (44, 46) is abnormal, blocks the drive signal output to the power supply control unit (200) to block the voltage applied to the electrodes (44, 46).

3. The water electrolysis device according to claim 1, wherein the system control unit (500) periodically outputs a polarity conversion signal to the electrode polarity conversion unit (400) to periodically switch the polarity of the voltage applied to each of the electrodes (44, 46).

4. The water electrolysis device according to claim 1, wherein the current measurement unit (300) includes:
a current sensor (310) that detects a change in the voltage (VELD_IN) applied to the electrode polarity conversion unit (400) and generates a current signal corresponding to the amount of current flowing through the electrodes (44, 46);
an amplifier (320) that amplifies the current signal generated by the current sensor (310) to generate an amplified current signal; and
a low-pass filter (330) that removes noise from the amplified current signal and outputs a current signal (I_SENSE) corresponding to the amount of current flowing through the electrodes (44, 46).

5. The water electrolysis device according to claim 1, wherein the electrode polarity conversion unit (400) includes:
a relay switch (410) that receives the voltage (VELD_IN) from the power supply control unit (200) and outputs it to the electrodes (44, 46), while being capable of converting the polarity of the voltage (VELD_IN) output to the electrodes (44, 46); and
a polarity conversion switch (420) that controls the relay switch (410) to convert the polarity of the voltage (VELD_IN) output to the electrodes (44, 46) according to the polarity conversion signal (ELD_SWITCH, high/low) input from the system control unit (500).

6. The water electrolysis device according to claim 1, wherein the power supply unit (100) includes:
a DC voltage smoothing and stabilizing unit (110) that smooths and stabilizes a DC voltage (DC VELD) output from a battery; and
a boost regulator (120) that boosts the DC voltage stabilized by the DC voltage smoothing and stabilizing unit (110) to a voltage required for electrolysis.

7. The water electrolysis device according to claim 1, wherein the power supply control unit (200) includes:
a power supply switch (210) that applies or blocks the voltage output from the power supply unit (100) to the electrodes (44, 46) through the current measurement unit (300) and the electrode polarity conversion unit (400); and
a power supply switch control switch (220) for turning the power supply switch (210) on/off according to a drive signal (ELD_PWR_EN) from the system control unit (500).

8. A skin cleansing device comprising:
a water tank (20) coupled to one end of a housing (10) and accommodating water;
a pump (30) that withdraws the water accommodated in the water tank (20) and transfers the withdrawn water at a predetermined pressure so that the withdrawn water is sprayed onto a user's skin through an electrolysis chamber (40);
the electrolysis chamber (40) including a pair of electrodes (44, 46) positioned facing each other, which electrolyzes the water supplied from the pump (30) to generate water containing microbubbles; and
an electrolysis circuit board (80) that supplies current to a first electrode (44) and a second electrode (46) to electrolyze the water passing through the first electrode (44) and the second electrode (46),
wherein the electrolysis circuit board (80) includes: a power supply unit (100) that outputs voltage applied to the electrodes (44, 46); a power supply control unit (200) that applies or blocks the voltage output from the power supply unit (100) to the electrodes (44, 46) according to a drive signal from a system control unit (500); a current measurement unit (300) that detects the amount of current supplied to the electrodes (44, 46) from the power supply control unit (200) and flowing through the electrodes (44, 46); an electrode polarity conversion unit (400) that switches the polarity of the voltage applied to the electrodes (44, 46) from the power supply control unit (200) according to a polarity conversion signal from the system control unit (500); and the system control unit (500) that controls the power supply control unit (200) according to the amount of current detected by the current measurement unit (300) and controls the operation of the electrode polarity conversion unit (400).
